# EUROPEAN PATENT APPLICATION

(11) **EP 1 204 026 A2**
(43) Date of publication of application: **08.05.2002**
(21) Application number: 01309161.6
(22) Date of filing: 29.10.2001
(51) Int. Cl.: G06F 9/46

(54) **Mandatory locking mechanisms for unix file systems**

(30) Priority: 01.11.2000 US 245406 P; 25.10.2001 US
(71) Applicant: Sun Microsystems, Inc., Palo Alto, California 94303 (US)
(72) Inventor: Kupfer, Michael D., Mountain View, California 94043 (US)
(74) Representative: Browne, Robin Forsythe, Dr.

(57) **Abstract**

Techniques for implementing mandatory locks for UNIX file systems are disclosed. The mandatory locks can provide similar features as the locking features provided in Windows computing environments, Mandatory locks can be defined and enforced in a secure UNIX computing environment. As a result, Windows clients (or users) can safely access files stored in the secure UNIX computing environment. Mandatory lock categories including Byte-Range locks and Shared Resource locks and can provide similar features as provided by the mandatory locking mechanisms of Windows environments. In addition, various attributes can be defined and associated with each mandatory lock category. Accordingly, access to files stored in UNIX file systems can be controlled based on the lock category and the attributes assigned to it.

## Description

### BACKGROUND OF THE INVENTION

### Field of the Invention

The present invention relates to distributed computing environments, and more particularly, to communication between various programs operating in the distributed computing environments.

### Description of the Related Art

Recently, distributed computing environments have become widespread. Accordingly, extensive efforts have been made to facilitate communication between the various computing nodes which typically operate in such environments. Unfortunately, conventional approaches fail to solve many other problems associated with communication between different computing environments. One such shortcoming is that the conventional approaches fail to provide a secure environment where information stored in one computing environment can be accessed from programs (or users) which operate in a different computing environment. For example, files stored in a conventional UNIX system cannot securely be accessed from a Windows computing environment. This is partially attributed to the fact that conventional UNIX systems do not typically provide similar mandatory locking mechanisms which are provided in the Windows computing environments. As a result, clients or users operating in Windows environments cannot effectively communicate with conventional UNIX systems since they may expect certain locking (or protection) mechanisms and/or may inadvertently corrupt files stored in the UNIX system. This is a serious drawback since it undermines the goal of interoperability between different computing environments in a distributed computing environment.

Accordingly, there is a need for improved locking mechanisms for UNIX file systems.

### SUMMARY OF THE INVENTION

Broadly speaking, the invention relates to techniques for implementing mandatory locks for UNIX file systems. As will be appreciated, the mandatory locks, among other things, can provide similar features as the locking features provided in the Windows computing environments. In accordance with one aspect of the invention, a secure UNIX computing environment is disclosed. Mandatory locks can be defined and enforced in the secure UNIX computing environment. As a result, Windows clients (or users) can safely access files stored in the secure UNIX computing environment.

In accordance with another aspect of the invention, various mandatory lock categories are provided. The mandatory lock categories include Byte-Range and Shared Resource locks which can provide similar features as the features provided by the mandatory locking mechanisms of Windows environments. In addition, various attributes can be defined and associated with each lock category. Accordingly, access to files stored in UNIX file systems can be controlled based on the lock category and the attributes assigned to it.

The invention can be implemented in numerous ways, including as a method, an apparatus, and computer readable media. Several embodiments of the invention are discussed below.

As a method of processing requests for performing operations on files which are capable of being stored in a UNIX file system, one embodiment of the invention includes the acts of receiving a request to perform at least one operation on a file stored in said UNIX file system; determining whether at least one mandatory lock is associated with the file; determining a mandatory lock category for at least one mandatory lock when it is determined that at least one mandatory lock is associated with the file; determining whether at least one operation should be allowed for at least one mandatory lock; and allowing at least one operation when it is determined that at least one operation should be allowed.

As a method of processing requests to perform operations on a file which is capable of being stored in a UNIX file system, another embodiment of the invention includes the acts of: receiving a request to perform an operation on a UNIX file which has a mandatory Byte-Range lock associated with it; determining whether the requested operation may affect a byte range of the UNIX file; and determining whether the operation is compatible with said Byte-Range lock when it is determined that the requested operation may affect said byte range.

As a method of processing requests to perform operations on a file which is capable of being stored in a UNIX file system, yet another embodiment of the invention includes the acts of: receiving a request to perform an operation on a UNIX file which has a mandatory Shared Resource lock associated with it; and determining whether a deny mode associated with the file covers an access mode associated with said request for accessing said file.

As a method of processing a request to change the size of a file which is capable of being stored in a UNIX file system; one embodiment of the invention include the acts of: determining whether a mandatory Byte-Range or a mandatory Shared Resource lock is associated with the file; determining whether the Shared Resource lock includes a deny write operation when it is determined that a mandatory Shared Resource lock is associated with the file; and identifying a region of the file which may be affected by the request to change the size of the file when it is determined that a mandatory Byte-range lock has been associated with the file.

As a UNIX computing environment, one embodiment of the invention includes a UNIX file system capable of storing one or more files therein. The UNIX computing environment is capable of enforcing mandatory locks for one or more files which can be stored in the UNIX file system. The mandatory locks comprise of at least two mandatory lock categories. These categories can be Byte-Range locks and Shared Resource locks. Furthermore, the UNIX computing environment can include a distributed file system and a file system-independent portion of an operating system. The mandatory locks can be at least partially implemented in the distributed file system and the file system-independent portion of the operating system.

As a computer readable media including computer program code for performing operations on files which are capable of being stored in a UNIX file system, one embodiment of the invention includes: computer program code for receiving a request to perform at least one operation on a file stored in the UNIX file system; computer program code for determining whether at least one mandatory lock is associated with the file; computer program code for determining a mandatory lock category for at least one mandatory lock when it is determined that at least one mandatory lock is associated with the file; computer program code for determining whether at least one operation should be allowed for at least one mandatory lock; and computer program code for allowing at least one operation when it is determined that the at least one operation should be allowed.

Other aspects and advantages of the invention will become apparent from the following detailed description, taken in conjunction with the accompanying drawings, illustrating by way of example the principles of the invention.

### BRIEF DESCRIPTION OF THE DRAWINGS

The present invention will be readily understood by the following detailed description in conjunction with the accompanying drawings, wherein like reference numerals designate like structural elements, and in which:
Fig. 1 illustrates a distributed computing environment in accordance with one embodiment of the invention.
Fig. 2 illustrates a processing method for processing requests for performing an operation on a file stored in a secured UNIX computing environment in accordance with one embodiment of the invention.
Fig. 3 illustrates a processing method for processing a request for performing an operation on a file which has a mandatory Byte-Range lock associated with it, in accordance with one embodiment of the invention.
Fig. 4 illustrates a processing method for processing a request for performing an operation on a file which has a mandatory Shared Resource lock associated with it, in accordance with one embodiment of the invention.
Fig. 5 illustrates a processing method for processing a request for changing the size of a file stored in a UNIX file system in accordance with one embodiment of the invention.

### DETAILED DESCRIPTION OF THE INVENTION

The invention pertains to techniques for implementing mandatory locks for UNIX file systems. As will be appreciated, the mandatory locks, among other things, can provide similar features as the locking features provided in the Windows computing environments. In accordance with one aspect of the invention, a secure UNIX computing environment is disclosed. Mandatory locks can be defined and enforced in the secure UNIX computing environment. As a result, Windows clients (or users) can safely access files stored in the secure UNIX computing environment.

In accordance with another aspect of the invention, various mandatory lock categories are provided. The mandatory lock categories include Byte-Range and Shared Resource locks which can provide similar features as the features provided by the mandatory locking mechanisms of Windows environments. In addition, various attributes can be defined and associated with each lock category. Accordingly, access to files stored in UNIX file systems can be controlled based on the lock category and the attributes assigned to it.

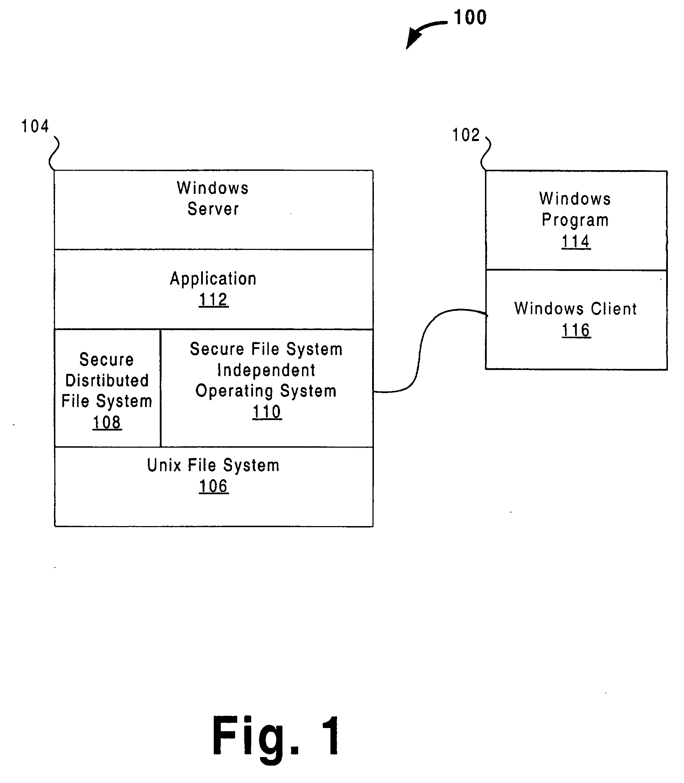

Fig. 1 illustrates a distributed computing environment 100 in accordance with one embodiment of the invention. As illustrated in Fig. 1, the computing environment 100 includes a Windows computing environment 102 and a secure UNIX computing environment 104 which can be in communication with each other. As will be appreciated, the secure UNIX computing environment 104 provides a secure environment for storage of files in a UNIX file system 106. This secure environment can be provided by allowing mandatory locks to be defined and enforced for the files stored in the UNIX file system 106. In the described embodiment, mandatory lock mechanisms are implemented in a secure distributed file system 108 and a secure file system-independent operating system 110 which can interact with an application 112 and the Unix File System 106. The distributed file system 108 can, for example, be a Network File System (NFS) which is compatible with the UNIX file system 106. The secure file system-independent operating system 110 typically represents a portion of the UNIX operating system which can be used by the application 112 to interact with the UNIX file system 106.

The mandatory lock mechanisms provided by the secure UNIX computing environment 104, among other things, can emulate the locking mechanism typically provided in Windows environments. As a result, a Windows program 114 operating in the Windows environment 102 can perform similar operations as it does on files stored in a Windows file system. Moreover, the mandatory lock mechanisms provided by the UNIX computing environment 104 ensures the integrity of the UNIX file system 106, as well as providing a file environment which the client program 102 expects. It should be noted that the Windows program 114 can use a Windows client 116. The Windows client 116 can, for example, be a Common Internet File System (CIFS) client.

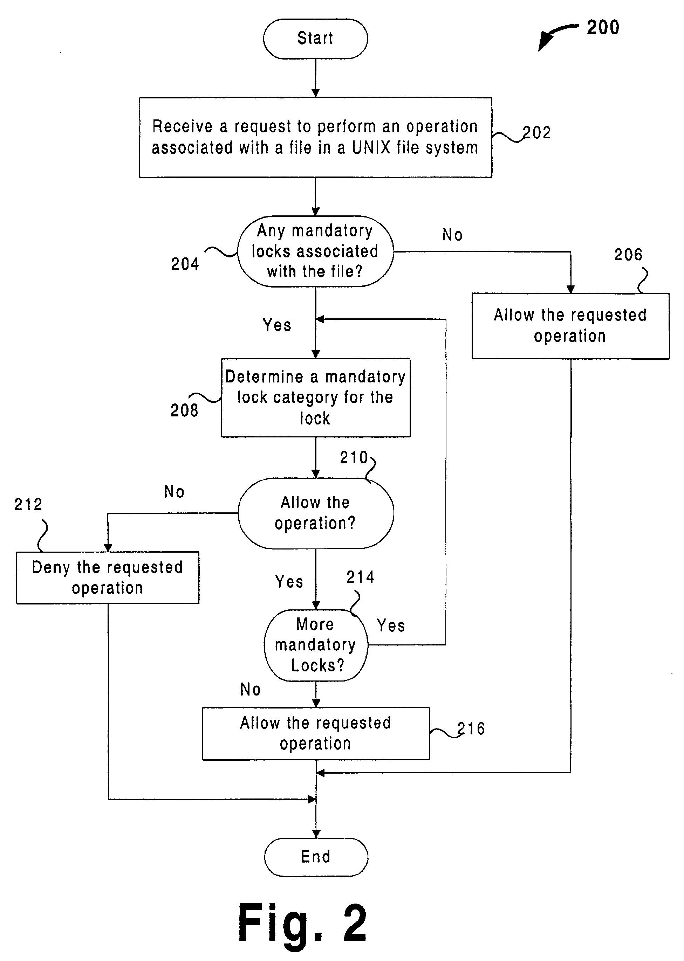

As noted above, mandatory locks can be used to provide a secure environment for files stored in a UNIX computing environment. Fig. 2 illustrates a processing method 200 for processing requests for performing an operation on a file stored in a secured UNIX computing environment in accordance with one embodiment of the invention. The processing method 200 can, for example, be implemented in the secure UNIX computing environment 104 of Fig. 1. As such, the processing method 200 is suitable for processing requests initiated from a Windows computing environment (e.g., Windows computing environment 102 of Fig. 1). Typically, these requests are made in order to perform one or more operations on the files stored in the secure UNIX computing environment.

Initially, at operation 202, a request to perform an operation associated with a file stored in the UNIX file system is received. Next, at operation 204, a determination is made as to whether any mandatory locks are associated with the file. If it is determined at operation 204 that no mandatory locks are associated with the file, the processing method 200 proceeds to operation 206 where the requested operation is allowed. The processing method 200 ends following the operation 206.

However, if it is determined at operation 204 that there is at least one mandatory lock associated with the file, the processing method 200 proceeds to operation 208 where a mandatory lock category is determined for the lock. Next, at operation 210, a determination is made as to whether the operation should be allowed. If it is determined at operation 210 that the operation should be denied, the processing method 200 proceeds to operation 212 where the requested operation is denied. The processing method 200 ends following the operation 212.

On the other hand, if it is determined at operation 210 that the operation should be allowed, the processing method 200 proceeds to operation 214 where a determination is made as to whether more mandatory locks are associated with the file. If it is determined at operation 214 that at least one more mandatory lock is associated with the file, the processing method 200 proceeds to operation 208 where a mandatory lock category is determined for the lock. Thereafter, the processing method 200 proceeds in a similar manner as described above. It should be noted that if it is determined at operation 214 that no more mandatory locks are associated with the file, the processing method 200 proceeds to operation 216 where the requested operation is allowed. The processing method 200 ends following operation 216.

As noted above, a mandatory lock category can be determined for a mandatory lock associated with a file stored in a UNIX file system. It should be noted that two or more mandatory lock categories can be defined and enforced in accordance with one aspect of the invention. Furthermore, one or more attributes can be associated with a mandatory lock in a mandatory lock category. These attributes can, for example, include type, region, owner, deny mode, and access mode. One of the mandatory lock categories can be referred to as a Byte-Range (BR) lock. Typically, a mandatory Byte-Range lock is a lock associated with a particular byte range of a given file. In other words, the mandatory Byte-Range lock is a lock typically placed with respect to a portion of the file. As such, one of the attributes that can be associated with a mandatory Byte-Range lock can be referred to as the region (or byte range). Other attributes can, for example, include type and owner. The attribute type can identify the type of the mandatory Byte-Range lock that is used (e.g., shared, exclusive, etc.). The attribute owner can identify the owner of the mandatory Byte-Range lock (e.g., a process).

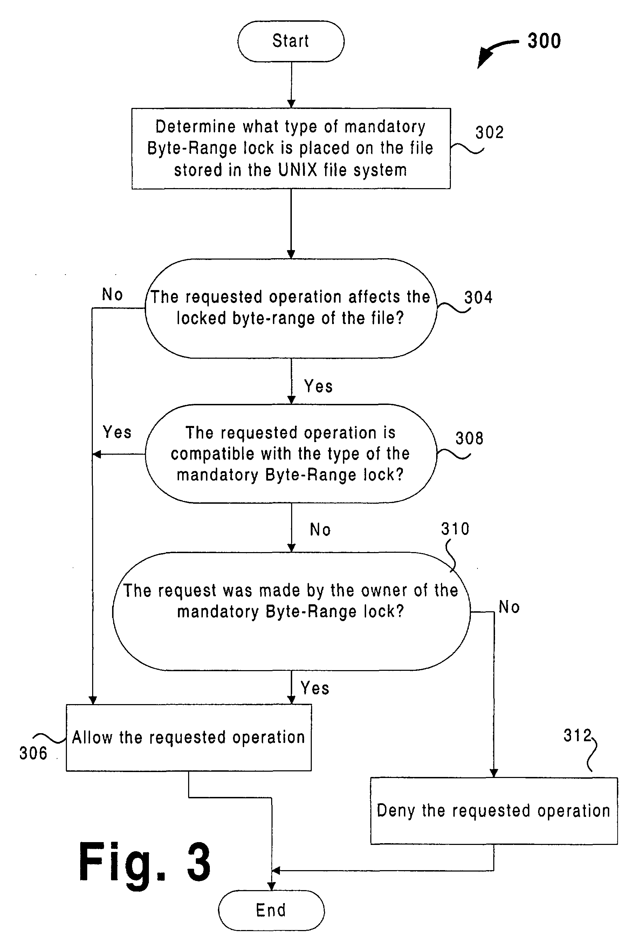

To elaborate, Fig. 3 illustrates a processing method 300 for processing a request for performing an operation on a file which has a mandatory Byte-Range lock associated with it, in accordance with one embodiment of the invention. The processing method 300 can, for example, illustrate processing performed at operation 210 of Fig. 2. As noted above, a mandatory Byte-Range lock can have an attribute type which identifies the type of the mandatory Byte-Range lock which is placed on the file. Accordingly, at operation 302, it is determined what type of mandatory Byte-Range lock is placed on the file. The type of mandatory Byte-Range lock can, for example, include shared and exclusive. After the type of the mandatory Byte-Range lock is determined, the processing method 300 proceeds to operation 304 where a determination is made as to whether the requested operation affects the locked byte range of the file. If it is determined at operation 304 that the requested operation does not affect the locked byte range of the file, the processing method 300 proceeds to operation 306 where the requested operation is allowed. The processing method 300 ends following operation 306.

On the other hand, if it is determined at operation 304 that the requested operation affects the locked byte range of the file, the processing method 300 proceeds to operation 308 where a determination is made as to whether the requested operation is compatible with the type of mandatory Byte-Range lock which is placed on the file. By way of example, a write operation on a file with an exclusive mandatory Byte-Range lock can be considered to be incompatible.

If it is determined at operation 308 that the requested operation is compatible with determined type of mandatory Byte-Range lock, the processing method 300 proceeds to operation 306 where the requested operation is allowed. The processing method 300 ends following operation 306, However, if it is determined at operation 308 that the requested operation is not compatible with the determined type of mandatory Byte-Range lock, the processing method 300 proceeds to operation 310 where a determination is made as to whether the request to perform an operation on the file was made by the owner of the mandatory Byte-Range lock. If it is determined at operation 310 that the request to perform the operation was made by the owner of the mandatory Byte-Range lock, the processing method 300 proceeds to operation 306 where the requested operation is allowed. The processing method 300 ends following operation 306. However, if it is determined at operation 310 that the request to perform the operation was not made by the owner of the mandatory Byte-Range lock, the processing method 300 proceeds to operation 312 where the requested operation is denied. The processing method 300 ends following operation 312.

Another category of mandatory locks can be referred to as a mandatory Shared Resource (SR) lock. The mandatory Shared Resource lock can be placed on a file which may be shared. Similar to Windows environments, attributes (or modes) can be associated with the mandatory Shared Resource lock which is placed on the file. By way example, deny modes can be defined for the mandatory Shared Resource lock. The deny mode can, for example, represent denying write and/or read operations on the file.

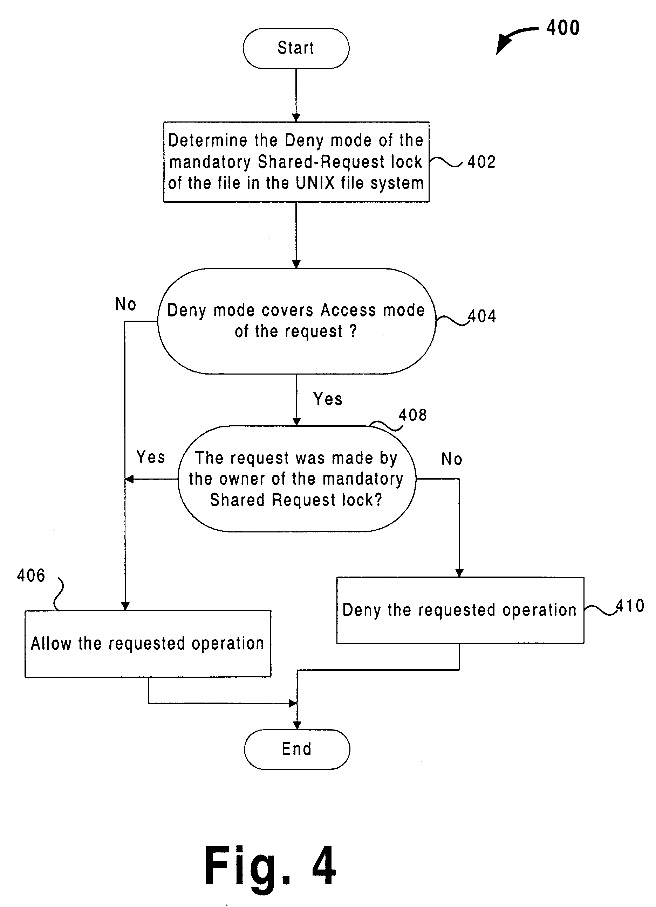

Fig. 4 illustrates a processing method 400 for processing a request for performing an operation on a file which has a mandatory Shared Resource lock associated with it, in accordance with one embodiment of the invention. The processing method 400 can, for example, illustrate processing performed at operation 210 of Fig. 2. Initially, at operation 402, the deny mode associated with the mandatory Shared Resource lock is determined. As noted above, the deny mode can, for example, represent denying write and/or read operations on the file. Next, at operation 404, a determination is made as to whether the deny mode covers the access mode associated with the operation. By way of example, if the deny mode had been defined with respect to write operations, an operation associated with a write access mode would cover the deny modes.

Accordingly, if it is determined at operation 404 that the deny mode does not cover the access mode associated with the operation, the processing method 400 proceeds to operation 406 where the requested operation is allowed. The processing method 400 ends following operation 406. However, if it is determined at operation 404 that the deny mode covers the access mode associated with the operation, the processing method 400 proceeds to operation 408 where a determination is made as to whether the request was made by the owner of the mandatory Shared Resource lock. If it is determined at operation 408 that the request was made by the owner of the mandatory Shared Resource lock, the processing method 400 proceeds to operation 406 where the requested operation is allowed. The processing method 400 ends following operation 406. However, if it is determined at operation 408 that the request was not made by the owner of the mandatory Shared Resource lock, the processing method 400 proceeds to operation 410 where the requested operation is denied. The processing method 400 ends following operation 410.

As will be appreciated, mandatory locks can be implemented with respect to various operations that can be performed on files stored in a UNIX file system. These operations include, for example, reading, writing, renaming, deleting, memory mapping and changing the size of files stored in a UNIX file system. By way of example, in the case of operations associated with mapping at least a portion of a file to memory (memory mapping), a processing method similar to the processing method 200 of Fig. 2, the processing method 300 of Fig. 3, or the processing method 400 of Fig. 4 is performed.

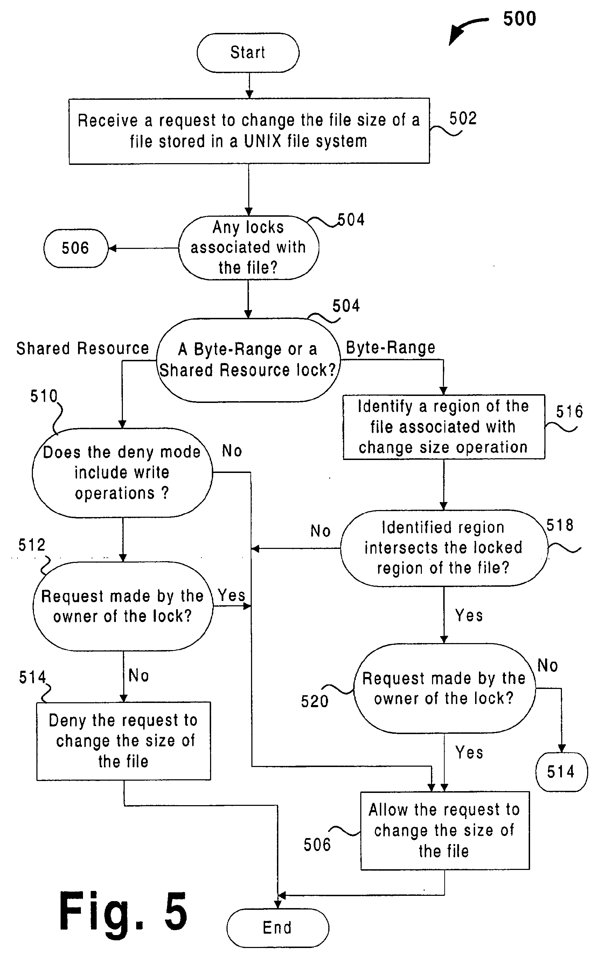

Fig. 5 illustrates a processing method 500 for processing a request for changing the size of a file stored in a UNIX file system in accordance with one embodiment of the invention. Initially, at operation 502, a request to change the file size of a file stored in a UNIX file system is received. Next, at operation 504, a determination is made as to whether any locks are associated with the file. If it is determined at operation 504 that no locks are associated with the file, the processing method 500 proceeds to operation 506 where the request to change the file size is allowed. The processing method 500 ends following operation 506. However, if it is determined at operation 504 that a lock is associated with the file, the processing method 500 proceeds to operation 508 where a determination is made as to whether a mandatory Byte-Range or a Shared Resource lock is associated with the file.

If it is determined at operation 508 that a mandatory Shared Resource lock is associated with the file, the processing method 500 proceeds to operation 510 where a determination is made as to whether the deny mode for the file includes write operations. If it is determined at operation 510 that the deny mode for the file does not include write operations, the processing method 500 proceeds to operation 506 where the request to change the file size is allowed. The processing method 500 ends following operation 506. However, if it is determined at operation 510 that the deny mode for the file includes write operations, the processing method 500 proceeds to operation 512 where it is determined whether the request to change the file size was made by the owner of the mandatory Shared Resource lock. If it determined at operation 512 that the request to change the file size was not made by the owner of the mandatory Shared Resource lock, the processing method proceeds to operation 514 where the request to change the file size is denied. The processing method 500 ends following the operation 514.

On the other hand, if it is determined at operation 508 that a mandatory Byte-Range lock is associated with the file, the processing method 500 proceeds to operation 516 where a region associated with the operation to change the file size is identified. Accordingly, at operation 518, a determination is made as to whether the identified region intersects the locked region (byte range) of the file. If it is determined at operation 518 that the identified region does not intersect the locked region, the processing method 500 proceeds to operation 506 where the request to change the file size is allowed. The processing method 500 ends following operation 506. However, if it is determined at operation 518 that the identified region intersects the locked region, the processing method 500 proceeds to operation 520 where a determination is made as to whether the request to change the file size was made by the owner of the Byte-Range lock. If it is determined at operation 520 that the request to change the file size was made by the owner of the Byte-Range lock, the processing method 500 proceeds to operation 506 where the request to change the file size is allowed. The processing method 500 ends following operation 506. However, if it is determined at operation 520 that the request to change the file size was not made by the owner of the Byte-Range lock, the processing method 500 proceeds to operation 514 where the request to change the file size is denied. The processing method 500 ends following operation 514.

The many features and advantages of the present invention are apparent from the written description, and thus, it is intended by the appended claims to cover all such features and advantages of the invention. Further, since numerous modifications and changes will readily occur to those skilled in the art, it is not desired to limit the invention to the exact construction and operation as illustrated and described. For example, several embodiments of the invention are described with reference to SOAP and SOAP interfaces. It will be understood, however, that the scope of the present invention includes other protocols and mechanisms by which the interaction of disparate nodes in a distributed computing environment may be facilitated. Hence, all suitable modifications and equivalents may be resorted to as falling within the scope of the invention.

## Claims

1. A method of processing requests for performing operations on files which are capable of being stored in a UNIX file system, said method comprising:
receiving a request to perform at least one operation on a file stored in said UNIX file system;
determining whether at least one mandatory lock is associated with said file;
determining a mandatory lock category for said at least one mandatory lock when said determining determines that at least one mandatory lock is associated with said file;
determining whether said at least one operation should be allowed for at least one mandatory lock; and
allowing said at least one operation when said determining determines that said at least one operation should be allowed.

2. A method a recited in claim 1, wherein said method further comprises:
denying said at least one operation when said determining determines that said at least one operation should not be allowed.

3. A method a recited in claim 1, wherein said request is sent by a Windows client.

4. A method a recited in claim 3, wherein said Windows client is a Common Internet File System client.

5. A method a recited in claim 1, wherein said method further comprises:
determining at least one mandatory lock type for said at least one mandatory lock when said determining determines that at least one mandatory lock is associated with said file.

6. A method a recited in claim 1,
wherein said method further comprises:
determining at least one mandatory lock type for said at least one mandatory lock when said determining determines that at least one mandatory lock is associated with said file;
wherein said determining of whether said at least one operation should be allowed for said at least one mandatory lock comprises:
determining whether said least one mandatory lock type is compatible with said at least one operation.

7. A method a recited in claim 1, wherein said at least mandatory lock category can be a Byte-Range lock or a Shared Resource lock.

8. A method a recited in claim 7, wherein the type of said Byte-Range lock can be exclusive or shared.

9. A method a recited in claim 7,
wherein said Shared Resource lock can have a deny mode associated with it; and
wherein said deny mode can be defined with respect to reading or writing of said file.

10. A method a recited in claim 1, wherein said at least one operation can be a read, write, delete, rename, memory map or change size operation.

11. A method of processing requests to perform operations on a file which is capable of being stored in a UNIX file system, said method comprising:
(a) receiving a request to perform an operation on a UNIX file which has a mandatory Byte-Range lock associated with it;
(b) determining whether said requested operation may affect a byte range of the UNIX file; said byte range representing a portion of said file which is associated the mandatory Byte-Range lock; and
(c) determining whether said operation is compatible with said Byte-Range lock when said determining (b) determines that said requested operation may affect said byte range.

12. A method as recited in claim 11, wherein said method further comprises:
determining whether said request was made by the owner of said Byte-Range lock when said determining (c) determines that said operation is not compatible with said Byte-Range.

13. A method as recited in claim 11, wherein said mandatory Byte-Range lock can be an exclusive or shared lock.

14. A method as recited in claim 11, wherein said requested operation is initiated from a Windows environment.

15. A method of processing requests to perform operations on a file which is capable of being stored in a UNIX file system, said method comprising:
(a) receiving a request to perform an operation on a UNIX file which has a mandatory Shared Resource lock associated with it; and
(b) determining whether a deny mode associated with the file covers an access mode associated with said request for accessing said file.

16. A method a recited in claim 15, wherein said method further comprises:
determining whether said request was made by the owner of said mandatory Shared Resource lock when said determining (b) determines that said deny mode associated with the file covers said access.

17. A method as recited in claim 15, wherein said deny and access modes can be defined with respect to at least one the operations of reading from and writing to files.

18. A method as recited in claim 15, wherein said requested operation is initiated from a Windows environment.

19. A method of processing a request to change the size of a file which is capable of being stored in a UNIX file system; said method comprising:
determining whether a mandatory Byte-Range lock or a mandatory Shared Resource lock is associated with said file;
determining whether said Shared Resource lock includes a deny write operation when said determining determines that a mandatory Shared Resource lock is associated with said file; and
identifying a region of said file which may be affected by said request to change the size of said file when said determining determines that a mandatory Byte-Range lock has been associated with the file.

20. A method as recited in claim 19, wherein said method further comprises:
determining whether said identified region intersects a locked region of said file; and
allowing said request to change said file size when said determining determines that said identified region does not intersect said locked region of said file.

21. A method as recited in claim 19, wherein said method further comprises:
determining whether said request was made by the owner of said mandatory Byte-Range lock or mandatory Shared Resource lock.

22. A method as recited in claim 19, wherein said request to change said file size is allowed when said determining whether said Shared Resource lock does not include a deny write operation.

23. A UNIX computing environment, comprising:
a UNIX file system capable of storing one or more files therein;
wherein said UNIX computing environment is capable of enforcing mandatory locks for said one or more files in said UNIX file system; and
wherein said mandatory locks comprise of at least two mandatory lock categories.

24. A UNIX computing environment as recited in claim 23, wherein said computing environment further comprises:
a distributed file system;
a file system-independent portion of an operating system; and
wherein said mandatory locks are at least partially implemented in said distributed file system and said file system-independent portion of said operating system.

25. A UNIX computing environment as recited in claim 24, wherein said at least two categories comprise Byte-Range locks and Shared Resource locks.

26. A UNIX computing environment as recited in claim 23, wherein said mandatory locks can be enforced with respect to read, write, delete, rename, memory map, or change size operations.

27. A computer readable media including computer program code for performing operations on files which are capable of being stored in a UNIX file system, said computer readable media comprising:
computer program code for receiving a request to perform at least one operation on a file stored in said UNIX file system;
computer program code for determining whether at least one mandatory lock is associated with said file;
computer program code for determining a mandatory lock category for said at least one mandatory lock when said determining determines that at least one mandatory lock is associated with said file;
computer program code for determining whether said at least one operation should be allowed for at least one mandatory lock; and
computer program code for allowing said at least one operation when said determining determines that said at least one operation should be allowed.

28. A computer readable media as recited in claim 27, wherein said computer readable media further comprises:
computer program code for denying said at least one operation when said determining determines that said at least one operation should not be allowed.

29. A computer readable media as recited in claim 27, wherein said request is sent by a Windows client.
